# EUROPÄISCHE PATENTSCHRIFT

(11) **EP 3 060 776 B1**
(45) Veröffentlichungstag und Bekanntmachung des Hinweises auf die Patenterteilung: **13.12.2017**
(21) Anmeldenummer: 14787107.3
(22) Anmeldetag: 22.10.2014
(51) Int. Cl.: B60K 5/02, F02N 15/00, F02N 15/08, F16C 3/28, F02B 75/04, F02N 11/00

(54) **KRAFTFAHRZEUG SOWIE VERFAHREN ZUM MONTIEREN EINES KRAFTFAHRZEUGS**
MOTOR VEHICLE AND METHOD FOR ASSEMBLING A MOTOR VEHICLE
VÉHICULE AUTOMOBILE ET PROCÉDÉ DE MONTAGE D'UN VÉHICULE AUTOMOBILE

(30) Priorität: 25.10.2013 DE 102013017784
(43) Veröffentlichungstag der Anmeldung: 31.08.2016
(73) Patentinhaber: Audi AG, 85045 Ingolstadt (DE)
(72) Erfinder: BRENDEL, Matthias, 85049 Ingolstadt (DE)
(86) Internationale Anmeldenummer: PCT/EP2014/002851
(87) Internationale Veröffentlichungsnummer: WO 2015/058856

(56) Entgegenhaltungen:
- EP-A1- 1 965 051
- EP-A1- 2 221 226
- EP-A2- 1 489 294
- WO-A1-02/46607
- DE-A1- 10 340 883
- DE-A1- 10 360 919
- DE-A1-102005 036 284
- DE-A1-102006 027 702
- DE-A1-102011 116 952
- GB-A- 890 512
- GB-A- 2 486 708
- JP-A- 2008 069 656
- JP-A- 2008 075 611
- US-A- 6 032 632
- US-A1- 2006 019 786
- US-A1- 2009 212 569
- US-A1- 2009 288 417

## Beschreibung

Die Erfindung betrifft ein Kraftfahrzeug mit einer in Längsrichtung in einen Motorraum eingebauten Brennkraftmaschine, die einen Mehrgelenkskurbeltrieb mit einer Exzenterwelle sowie einen Kurbelwellenstarter aufweist. Die Erfindung betrifft weiterhin ein Verfahren zum Montieren eines Kraftfahrzeugs.

Das Kraftfahrzeug weist den Motorraum auf, in welchem die Brennkraftmaschine angeordnet ist. Dabei ist die Brennkraftmaschine in Längsrichtung ausgerichtet. Das bedeutet, dass ihre Zylinder beziehungsweise Kolben sowie eine Kurbelwelle der Brennkraftmaschine im Wesentlichen in Hauptfahrtrichtung des Kraftfahrzeugs beziehungsweise in Richtung einer Längsachse des Kraftfahrzeugs angeordnet sind. Im Gegensatz dazu ist aus dem Stand der Technik weiterhin eine Anordnung der Brennkraftmaschine in Querrichtung bekannt. Bei dieser sind entsprechend die Zylinder beziehungsweise Kolben im Wesentlichen quer zu der Hauptfahrtrichtung beziehungsweise der Längsrichtung des Kraftfahrzeugs ausgerichtet, also insbesondere parallel zu einer oder mehreren Achsen des Kraftfahrzeugs.

Im weiteren Kontext geht es jedoch um die Längsanordnung der Brennkraftmaschine in dem Motorraum. Selbstverständlich sind dabei Abweichungen von der Längsrichtung in gewissem Maß zugelassen, beispielsweise eine Abweichung von höchstens 1°, höchstens 2°, höchstens 3°, höchstens 4°, höchstens 5° oder höchstens 10°. Die Brennkraftmaschine weist den Mehrgelenkskurbeltrieb sowie den Kurbelwellenstarter auf. Der Mehrgelenkskurbeltrieb verfügt seinerseits über die Exzenterwelle. Das Kraftfahrzeug ist beispielsweise mit einer mittels der Brennkraftmaschine angetriebenen Vorderachse oder mehreren von der Brennkraftmaschine angetriebenen Achsen, insbesondere einer angetriebenen Vorderachse und einer angetriebenen Hinterachse, ausgerüstet.

Aus dem Stand der Technik ist beispielsweise die Druckschrift US 8,404,171 B2 bekannt, welche eine in Querrichtung in einem Motorraum angeordnete Brennkraftmaschine zeigt.

Es ist nun Aufgabe der Erfindung, ein Kraftfahrzeug vorzuschlagen, bei welchem eine ideale Raumnutzung des Motorraums und/oder eine einfache Montage der Brennkraftmaschine realisiert sind.

Dies wird erfindungsgemäß mit einem Kraftfahrzeug mit den Merkmalen des Anspruchs 1 erreicht. Dabei ist vorgesehen, dass der Kurbelwellenstarter derart bezüglich der Brennkraftmaschine angeordnet ist, dass eine von Zylinderlängsmittelachsen der Brennkraftmaschine aufgespannte Zylinderlängsmittelebene zwischen dem Kurbelwellenstarter und der Exzenterwelle liegt. Anders ausgedrückt liegt die Exzenterwelle auf einer ersten Seite der Zylinderlängsmittelebene und der Kurbelwellenstarter auf einer zweiten Seite der Zylinderlängsmittelebene, wobei die zweite Seite der ersten Seite gegenüberliegt. Die Zylinderlängsmittelebene wird von mehreren Zylinderlängsmittelachsen der Brennkraftmaschine, insbesondere allen Zylinderlängsmittelachsen der Brennkraftmaschine, definiert. Unter den Zylinderlängsmittelachsen sind die Längsmittelachsen der Zylinder der Brennkraftmaschine zu verstehen. Jede Zylinderlängsmittelachse definiert also einen Mittelpunkt des ihr zugeordneten Zylinders über dessen Längserstreckung hinweg. Die Zylinderlängsmittelachsen verlaufen parallel zueinander, insbesondere sind die Abstände zwischen unmittelbar benachbarten Zylinderlängsmittelachsen für alle Zylinder gleich. Die Zylinderlängsmittelebene nimmt nun diese Zylinderlängsmittelachsen in sich auf; die Zylinderlängsmittelachsen liegen also in der Zylinderlängsmittelebene.

Um eine besonders kompakte Ausgestaltung der Brennkraftmaschine zu realisieren, sollen der Kurbelwellenstarter und die Exzenterwelle auf gegenüberliegenden Seiten der Zylinderlängsmittelebene angeordnet sein. Darunter ist zu verstehen, dass zumindest eine Drehachse des Kurbelwellenstarters und eine Drehachse der Exzenterwelle bezüglich der Zylinderlängsmittelebene einander gegenüberliegen. Besonders bevorzugt ist jedoch der gesamte Kurbelwellenstarter auf der ersten Seite der Zylinderlängsmittelebene und der Exzenterwelle auf der zweiten Seite der Zylinderlängsmittelebene realisiert. Dabei ist vorzugsweise mit dem Kurbelwellenstarter lediglich eine diesem zugeordnete elektrische Maschine gemeint.

Unter dem Kurbelwellenstarter ist ein Starter beziehungsweise ein Startergenerator der Brennkraftmaschine zu verstehen, welcher unmittelbar an einer Kurbelwelle der Brennkraftmaschine angreift oder über ein Formschlussgetriebe mit ihr wirkverbunden ist. Das Formschlussgetriebe ist beispielsweise ein Zahnradgetriebe oder dergleichen. Der Kurbelwellenstarter kann permanent mit der Kurbelwelle der Brennkraftmaschine wirkverbunden sein. Alternativ ist eine lediglich zeitweise Wirkverbindung realisiert. Der Kurbelwellenstarter ist von einem Riemenstarter zu unterscheiden, welcher über ein Riemengetriebe mit der Kurbelwelle wirkverbunden ist. Der Kurbelwellenstarter soll also gerade nicht über ein solches Riemengetriebe an die Kurbelwelle angeschlossen sein.

Wie bereits angedeutet, kann der Kurbelwellenstarter sowohl als reiner Starter, also als Elektromotor, oder alternativ als Startergenerator realisiert sein. Mit dem Startergenerator ist neben einem Schleppen der Brennkraftmaschine, insbesondere zu ihrem Starten, auch ein generatorischer Betrieb realisierbar, bei welchem die Bewegungsenergie der Kurbelwelle in elektrische Energie umgewandelt wird, insbesondere während eines Rekuperationsbetriebs des Kraftfahrzeugs.

Die Exzenterwelle ist, wie bereits erläutert, Bestandteil des Mehrgelenkskurbeltriebs. Dieser weist bevorzugt eine Mehrzahl von drehbar auf Hubzapfen der Kurbelwelle gelagerten Koppelgliedern und eine Mehrzahl von drehbar auf Hubzapfen der Exzenterwelle gelagerten Anlenkpleueln auf, wobei jedes der Koppelglieder schwenkbar mit einem Kolbenpleuel eines Kolbens der Brennkraftmaschine und einem der Anlenkpleuel verbunden ist. Beispielsweise kann der Drehwinkel der Exzenterwelle mittels einer Stelleinrichtung, insbesondere in Abhängigkeit von einem Betriebspunkt der Brennkraftmaschine, verstellt werden. Alternativ kann die Exzenterwelle auch mit der Kurbelwelle der Brennkraftmaschine wirkverbunden und auf diese Weise von ihr antreibbar sein.

Der Mehrgelenkskurbeltrieb verfügt insbesondere über eine der Anzahl der Kolben der Brennkraftmaschine entsprechende Anzahl von Koppelgliedern, die jeweils drehbar auf dem entsprechenden Hubzapfen der Kurbelwelle gelagert sind und zwei nach entgegengesetzten Seiten über die Kurbelwelle überstehende, an ihrem Ende jeweils mit einem Schwenkgelenk versehene Arme aufweisen. Eines der Schwenkgelenke dient zur schwenkbaren Verbindung mit dem Kolbenpleuel, der einen der Kolben der Brennkraftmaschine über das Koppelglied mit der Kurbelwelle verbindet. Ein anderes der Schwenkgelenke dient zur schwenkbaren Verbindung mit dem sogenannten Anlenkpleuel, welche mit seinem anderen Ende drehbar auf dem Hubzapfen der Exzenterwelle gelagert ist.

Mittels des Mehrgelenkskurbeltriebs kann das in dem dem Kolben jeweils zugeordneten Zylinder erreichte Verdichtungsverhältnis eingestellt werden, insbesondere in Abhängigkeit von dem Betriebspunkt der Brennkraftmaschine und/oder dem Arbeitstakt. Zum Verstellen des Verdichtungsverhältnisses wird die Exzenterwelle in eine bestimmte, dem gewünschten Verdichtungsverhältnis entsprechende Drehwinkelstellung gebracht oder die Phasenlage zwischen der Exzenterwelle und der Kurbelwelle auf einen bestimmten Wert eingestellt, insbesondere mithilfe der Stelleinrichtung.

Eine weitere Ausgestaltung der Erfindung sieht vor, dass der Kurbelwellenstarter als Ritzelstarter ausgebildet ist. Der Ritzelstarter zeichnet sich insbesondere dadurch aus, dass der Kurbelwellenstarter über ein Zahnradgetriebe mit der Kurbelwelle der Brennkraftmaschine wirkverbunden ist beziehungsweise wirkverbunden werden kann. In ersterem Fall ist der Ritzelstarter permanent über ein Zahnradgetriebe mit der Kurbelwelle wirkverbunden. Soll lediglich eine zeitweise Wirkverbindung zwischen dem Kurbelwellenstarter beziehungsweise dem Ritzelstarter und der Kurbelwelle vorliegen, so kann der Ritzelstarter ein Starterritzel aufweisen, das auf einer Starterwelle des Ritzelstarters axial verlagerbar, jedoch drehfest mit ihr wirkverbunden ist. In wenigstens einer axialen Position des Starterritzels wirkt es mit einem permanent mit der Kurbelwelle wirkverbundenen Ritzel zusammen, um die Wirkverbindung zwischen dem Ritzelstarter und der Kurbelwelle herzustellen. Beispielsweise liegt der Ritzelstarter als Schub-Schraubtriebstarter vor.

Eine besonders bevorzugte Ausgestaltung der Erfindung sieht vor, dass die Brennkraftmaschine zusätzlich einen Riemenstarter aufweist. Wie bereits vorstehend erläutert, ist der Riemenstarter im Gegensatz zu dem Kurbelwellenstarter über einen Riementrieb mit der Kurbelwelle wirkverbunden. Auch der Riemenstarter kann als reiner Starter oder alternativ als Startergenerator und mithin als Riemenstartergenerator vorliegen.

Eine Weiterbildung der Erfindung sieht vor, dass der Riemenstarter auf derselben Seite der Zylinderlängsmittelebene angeordnet ist wie die Exzenterwelle. Analog zu der Anordnung des Kurbelwellenstarters und der Exzenterwelle kann eine derartige Anordnung lediglich für eine Drehachse des Riemenstarters vorgesehen sein, sodass lediglich diese, nicht jedoch der gesamte Riemenstarter, auf der entsprechenden Seite der Zylinderlängsmittelebene vorliegt. Besonders bevorzugt ist jedoch der gesamte Riemenstarter beziehungsweise eine diesem zugeordnete elektrische Maschine auf derselben Seite der Zylinderlängsmittelebene vorgesehen wie die Exzenterwelle. Diese Anordnung hat den Vorteil, dass ein möglichst großer Bauraum für weitere Elemente der Brennkraftmaschine oder weitere in dem Motorraum angeordnete Aggregate zur Verfügung steht.

Eine besonders bevorzugte Ausführungsform der Erfindung sieht vor, dass der Kurbelwellenstarter und/oder der Riemenstarter oberhalb einer Parallelebene liegen, die parallel zu einer Bodengrenzebene der Brennkraftmaschine verläuft und eine Drehachse der Exzenterwelle aufnimmt oder die parallel zu der Bodengrenzebene verläuft und tangential an einer effektiven Hüllfläche einer Kurbelwelle der Brennkraftmaschine anliegt. Die Bodengrenzebene ist eine gedachte Ebene, welche beispielsweise durch die beiden oder die drei am tiefsten gelegenen Punkte der Brennkraftmaschine, insbesondere eines Kurbelgehäuses der Brennkraftmaschine, definiert ist. Die beiden Punkte beziehungsweise die drei Punkte werden dabei besonders bevorzugt in einem Querschnitt - bezüglich einer Drehachse der Kurbelwelle der Brennkraftmaschine - ausgewählt. Die Parallelebene liegt nun parallel zu dieser Bodengrenzebene. Gleichzeitig nimmt sie die Drehachse der Exzenterwelle auf, sodass diese in der Parallelebene liegt.

Alternativ kann die Parallelebene zwar hinsichtlich der Bodengrenzebene gemäß den vorstehenden Ausführungen identisch angeordnet sein, jedoch als Tangentialebene an der effektiven Hüllfläche der Kurbelwelle anliegen. Die Kurbelwelle schließt dabei insbesondere Gegengewichte ein, welche beispielsweise auf der - bezüglich der Drehachse der Kurbelwelle - den Hubzapfen der Kurbelwelle gegenüberliegenden Seite der Kurbelwelle angeordnet sind und dabei starr an der Kurbelwelle vorliegen, also gemeinsam mit dieser bei einem Betrieb der Brennkraftmaschine umlaufen. Unter der effektiven Hüllfläche ist diejenige Hüllfläche zu verstehen, welche sich aus einem vollständigen Umlaufen der Kurbelwelle ergibt. Insbesondere soll das tangentiale Anliegen an die Hüllfläche auf der der Bodengrenzebene zugewandten Seite der Hüllfläche vorgesehen sein. Selbstverständlich kann jedoch das tangentiale Anliegen auch auf der der Bodengrenzebene abgewandten Seite der Hüllfläche realisiert sein.

Es ist nun vorgesehen, dass der Kurbelwellenstarter und/oder der Riemenstarter wenigstens bereichsweise oberhalb dieser Parallelebene angeordnet sind, wobei zumindest die Drehachse des Kurbelwellenstarters beziehungsweise des Riemenstarters oberhalb der Parallelebene angeordnet ist. Besonders bevorzugt sind jedoch der gesamte Kurbelwellenstarter und/oder der gesamte Riemenstarter beziehungsweise die entsprechende elektrische Maschine oberhalb der Parallelebene vorgesehen. Insbesondere liegt der Kurbelwellenstarter näher bei der Parallelebene als der Riemenstarter. Besonders bevorzugt liegt der Kurbelwellenstarter oder zumindest seine Drehachse zwischen der Parallelebene und einer weiteren Parallelebene, die ebenfalls parallel zu der Bodengrenzebene der Brennkraftmaschine verläuft, jedoch die Drehachse der Kurbelwelle der Brennkraftmaschine aufnimmt. Besonders bevorzugt liegt zudem der Riemenstarter oder zumindest seine Drehachse oberhalb dieser weiteren Parallelebene.

Eine weitere bevorzugte Ausführungsform der Erfindung sieht vor, dass eine Stelleinrichtung für eine Exzenterwellenverstellung unterhalb der Parallelebene und/oder auf derselben Seite der Zylinderlängsmittelebene wie die Exzenterwelle liegt. Wie bereits vorstehend erläutert, dient die Stelleinrichtung der Verstellung der Exzenterwelle, insbesondere dem Einstellen einer bestimmten Drehwinkelstellung und/oder einer bestimmten Phasenlage zwischen der Exzenterwelle und der Kurbelwelle. Diese Stelleinrichtung beziehungsweise wenigstens eine Drehachse der Stelleinrichtung soll nun auf die genannte Art und Weise angeordnet sein. Besonders bevorzugt ist jedoch die gesamte Stelleinrichtung unterhalb der Parallelebene beziehungsweise auf derselben Seite der Zylinderlängsmittelebene wie die Exzenterwelle vorgesehen. Durch die tiefe Anordnung der Stelleinrichtung wird ein besonders tiefer Schwerpunkt der Brennkraftmaschine erzielt. Die genannte Anordnung der Stelleinrichtung ist zudem gut zugänglich und zudem thermisch unproblematisch.

Eine bevorzugte Ausgestaltung der Erfindung sieht vor, dass ein die Stelleinrichtung und die Exzenterwelle wirkverbindendes Getriebe in Längsrichtung der Brennkraftmaschine gesehen auf der einem Kurbelwellenabtrieb abgewandten Seite der Brennkraftmaschine angeordnet ist. Die Längsrichtung der Brennkraftmaschine liegt dabei entlang der Drehachse der Kurbelwelle vor. Der Kurbelwellenabtrieb ist üblicherweise auf einer Rückseite der Brennkraftmaschine angeordnet, sodass entsprechend das Getriebe nun auf der Vorderseite der Brennkraftmaschine vorliegen soll. Auf diese Art und Weise ist kein Bauraumkonflikt bei einem Anschließen der Brennkraftmaschine über den Kurbelwellenabtrieb zu erwarten.

Schließlich kann vorgesehen sein, dass der Kurbelwellenstarter in einem zwischen Brennkraftmaschine und einer Motorstütze vorliegenden Hohlraum angeordnet ist, wobei die Brennkraftmaschine über die Motorstütze an einer Karosserie des Kraftfahrzeugs befestigt ist. Der Brennkraftmaschine ist die wenigstens eine Motorstütze zugeordnet. Über diese ist sie an der Karosserie des Kraftfahrzeugs im Wesentlichen ortsfest in dem Motorraum des Kraftfahrzeugs gehalten. Die Motorstütze weist dabei beispielsweise wenigstens zwei Befestigungsarme auf, über welche sie an der Brennkraftmaschine angreift. Über einen Koppelarm sind die Befestigungsarme schließlich mit der Karosserie des Kraftfahrzeugs verbunden. Nach der Befestigung der Motorstütze an der Brennkraftmaschine bilden die Befestigungsarme zusammen mit der Brennkraftmaschine den Hohlraum aus. In diesem soll der Kurbelwellenstarter wenigstens bereichsweise, insbesondere vollständig, angeordnet werden. Bedingt durch die Anordnung des Kurbelwellenstarters in dem Hohlraum wird seine thermische Belastung durch den Betrieb der Brennkraftmaschine, insbesondere das von der Brennkraftmaschine erzeugte Abgas, deutlich verringert. Insbesondere dient die Motorstütze also als Isolierung für den Kurbelwellenstarter.

Die Erfindung betrifft weiterhin ein Verfahren zum Montieren eines Kraftfahrzeugs, insbesondere eines Kraftfahrzeugs gemäß den vorstehenden Ausführungen, wobei das Kraftfahrzeug über eine in Längsrichtung in einen Motorraum eingebaute Brennkraftmaschine verfügt, die einen Mehrgelenkskurbeltrieb mit einer Exzenterwelle sowie einen Kurbelwellenstarter aufweist. Dabei ist vorgesehen, dass der Kurbelwellenstarter derart bezüglich der Brennkraftmaschine angeordnet wird, dass eine von Zylinderlängsmittelachsen der Brennkraftmaschine aufgespannte Zylinderlängsmittelebene zwischen dem Kurbelwellenstarter und der Exzenterwelle liegt. Auf die Vorteile einer derartigen Vorgehensweise beziehungsweise einer derartigen Ausgestaltung des Kraftfahrzeugs wurde bereits eingegangen. Sowohl das Verfahren als auch das Kraftfahrzeug können gemäß den vorstehenden Ausführungen weitergebildet sein, sodass insoweit auf diese verwiesen wird. Unter dem Kurbelwellenstarter, dem Riemenstarter und der Stelleinrichtung ist bevorzugt der jeweilige Elektromotor beziehungsweise die jeweilige elektrische Maschine zu verstehen, welcher/welche in der entsprechenden Einrichtung vorgesehen ist.

Mit besonderem Vorteil kann vorgesehen sein, dass der Kurbelwellenstarter an der Brennkraftmaschine angeordnet sowie elektrisch mit dieser verbunden wird und anschließend eine Abgasanlage an der Brennkraftmaschine befestigt wird. Es ist also vorgesehen, zunächst den Kurbelwellenstarter vollständig an der Brennkraftmaschine zu montieren, insbesondere an dieser zu befestigen und die elektrische Kontaktierung zu der Brennkraftmaschine beziehungsweise einem Steuergerät der Brennkraftmaschine herzustellen. Erst anschließend soll die Abgasanlage, bestehend beispielsweise aus einem Abgaskrümmer und/oder wenigstens einer Abgasleitung, an der Brennkraftmaschine angeordnet und befestigt werden.

Dabei kann es zudem vorgesehen sein, dass vor dem Befestigen der Abgasanlage an der Brennkraftmaschine die bereits beschriebene Motorstütze an der Brennkraftmaschine befestigt wird, sodass der Kurbelwellenstarter in dem zwischen der Brennkraftmaschine und der Motorstütze vorliegenden Hohlraum aufgenommen ist. Besonders bevorzugt sind sowohl der gesamte Kurbelwellenstarter als auch die zu seiner Kontaktierung verwendeten elektrischen Leitungen vollständig in dem Hohlraum aufgenommen, sodass sie nachfolgend vor Beschädigungen geschützt sind. Bei dem folgenden Befestigen der Abgasanlage und/oder einem Montieren der Brennkraftmaschine in dem Motorraum des Kraftfahrzeugs werden auf diese Art und Weise also Beschädigungen des Kurbelwellenstarters verhindert.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine perspektivische Ansicht eines Bereichs einer Brennkraftmaschine,
- Figur 2: eine Frontansicht der Brennkraftmaschine,
- Figur 3: eine Frontschnittansicht der Brennkraftmaschine,
- Figur 4: eine Frontansicht der Brennkraftmaschine mit einer Motorstütze zur Befestigung der Brennkraftmaschine an einer Karosserie eines Kraftfahrzeugs, und
- Figur 5: eine Frontansicht der Brennkraftmaschine in einer alternativen Ausgestaltung, und
- Figur 6: eine Frontschnittansicht der Brennkraftmaschine in der alternativen Ausgestaltung.

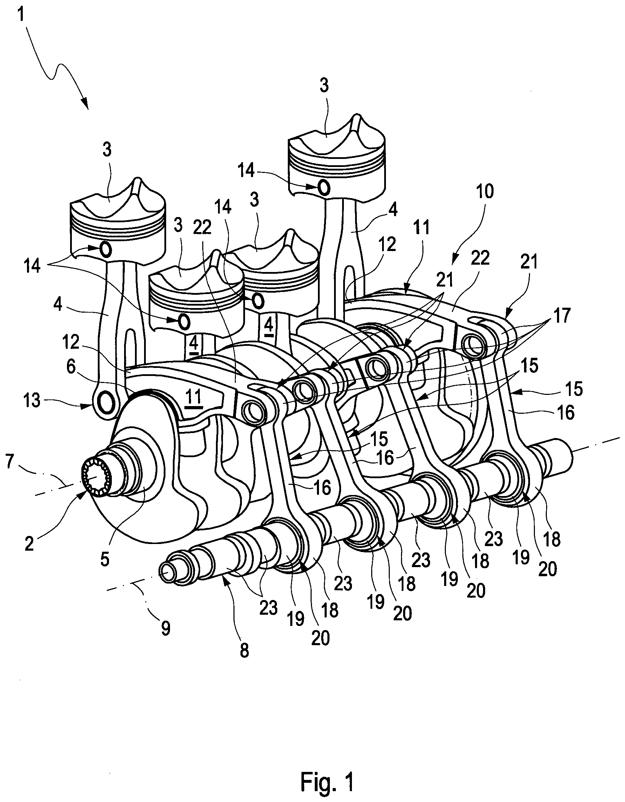

Die Figur 1 zeigt eine perspektivische Ansicht eines Bereichs einer Brennkraftmaschine 1, welche insbesondere als Reihenbrennkraftmaschine, beispielsweise als Viertakt-Vierzylinder-Reihenbrennkraftmaschine vorliegt. Die Brennkraftmaschine 1 verfügt über eine Kurbelwelle 2 und mehrere Kolben 3, von welchen jeder in einem von mehreren nicht dargestellten Zylindern der Brennkraftmaschine 1 beweglich gelagert ist. Jeder der Kolben 3 ist durch einen Kolbenpleuel 4 mit der Kurbelwelle 2 verbunden. Die Kurbelwelle 2 ist in hier nicht dargestellten Wellenlagern eines ebenfalls nicht dargestellten Zylinderkurbelgehäuses der Brennkraftmaschine 1 drehbar gelagert und weist wenigstens einen zur Lagerung dienenden zentrischen Wellenzapfen 5 sowie mehrere Hubzapfen 6 (von welchen in der Figur 1 jeweils nur einer sichtbar ist) auf, deren Längsmittelachsen in unterschiedlichen Winkelausrichtungen parallel zu einer Drehachse 7 der Kurbelwelle 2 versetzt sind.

Die Brennkraftmaschine 1 umfasst weiter eine Exzenterwelle 8, die bevorzugt eine zur Drehachse 7 der Kurbelwelle 2 parallele Drehachse 9 aufweist. Die Exzenterwelle 8 ist beispielsweise neben der Kurbelwelle 2 sowie etwas unterhalb von dieser im Zylinderkurbelgehäuse drehbar gelagert und mit der Kurbelwelle 2 gekoppelt. Die Exzenterwelle 8 ist Bestandteil eines Mehrgelenkskurbeltriebs 10, welcher weiter mehrere Koppelglieder 11 aufweist, die jeweils auf einem der Hubzapfen 6 der Kurbelwelle 2 drehbar gelagert sind. Jedes der Koppelglieder 11 weist einen Hubarm 12 auf, der über ein Schwenkgelenk 13 schwenkbar mit einem unteren Ende von einem der Kolbenpleuel 4 verbunden ist. Ein oberes Ende des jeweiligen Kolbenpleuels 4 ist über ein weiteres Schwenkgelenk 14 am zugehörigen Kolben 3 angelenkt. Insgesamt ist also jeder der Kolben 3 durch den jeweiligen Kolbenpleuel 4 und das jeweilige Koppelglied 11 mit der Kurbelwelle 2 wirkverbunden.

Der Mehrgelenkskurbeltrieb 10 umfasst weiter eine der Anzahl der Kolbenpleuel 4 und der Koppelglieder 11 entsprechende Anzahl von Anlenkpleueln 15. Diese sind beispielsweise ungefähr parallel zu den Kolbenpleueln 4 ausgerichtet und in axialer Richtung der Kurbelwelle 2 und der Exzenterwelle 8 jeweils in etwa derselben Ebene wie der dazugehörige Kolbenpleuel 4, jedoch auf der entgegengesetzten Seite der Kurbelwelle 2, angeordnet. Jeder Anlenkpleuel 15 umfasst eine Pleuelstange 16 und zwei an entgegengesetzten Enden der Pleuelstange 16 angeordnete Pleuelaugen 17 und 18, insbesondere mit unterschiedlichen inneren Durchmessern. Das größere Pleuelauge 18 jedes Anlenkpleuels 15 am unteren Ende der Pleuelstange 16 umgibt einen in Bezug zur Drehachse 9 der Exzenterwelle 8 exzentrischen Hubzapfen 19 der Exzenterwelle 8, auf dem der Anlenkpleuel 15 mittels eines Drehlagers 20 drehbar gelagert ist. Das kleinere Pleuelauge 17 am oberen Ende der Pleuelstange 16 jedes Anlenkpleuels 15 bildet einen Teil eines Schwenkgelenks 21 zwischen dem Anlenkpleuel 15 und einem längeren Koppelarm 22 des benachbarten Koppelglieds 11, der auf der zum Hubarm 12 entgegengesetzten Seite der Kurbelwelle 2 über diese übersteht.

Die Exzenterwelle 8 weist zwischen benachbarten exzentrischen Hubzapfen 19 sowie an ihren Stirnenden zur Lagerung der Exzenterwelle 8 in Wellenlagern dienende, zur Drehachse 10 koaxiale Wellenabschnitte 23 auf. Abgesehen von einer variablen Verdichtung kann durch die zuvor beschriebene Anordnung auch die Neigung der Kolbenpleuel 4 in Bezug zur Zylinderachse beziehungsweise Zylinderlängsmittelachse der zugehörigen Zylinder während der Drehung der Kurbelwelle 2 verringert werden, was zu einer Verringerung der Kolbenseitenkräfte und damit der Reibkräfte zwischen den Kolben 2 und Zylinderwänden der Zylinder führt.

Alternativ kann selbstverständlich auch eine andere Ausgestaltung der Brennkraftmaschine 1 beziehungsweise des Mehrgelenkskurbeltriebs 10 realisiert sein. Die vorstehenden Ausführungen sind exemplarisch und dienen der grundsätzlichen Erläuterung der Funktionsweise der einzelnen Elemente.

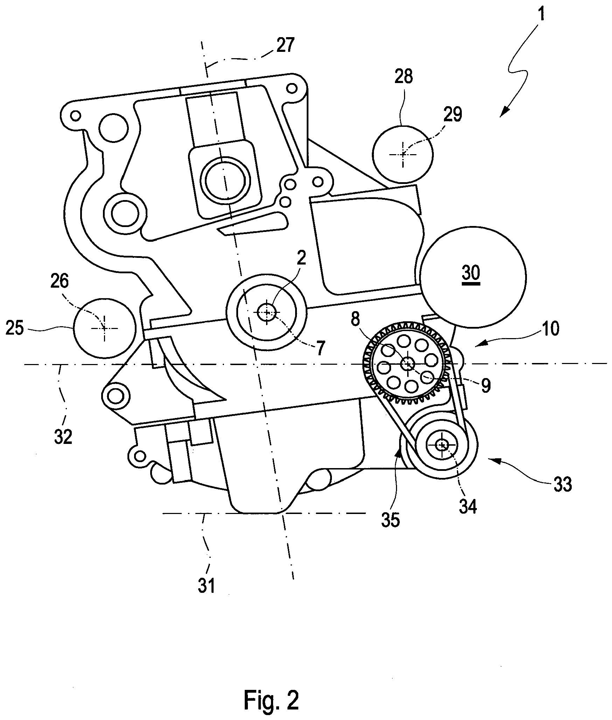

Die Figur 2 zeigt eine Frontansicht der Brennkraftmaschine 1. Diese verfügt über einen Kurbelwellenstarter 25, welcher hier lediglich schematisch dargestellt ist. Eine Drehachse 26 des Kurbelwellenstarters 25 beziehungsweise eines Elektromotors des Kurbelwellenstarters 25 ist ebenfalls angedeutet. Der Kurbelwellenstarter 25 ist derart angeordnet, insbesondere bezüglich der Brennkraftmaschine 1, dass zwischen ihm und der Exzenterwelle 8 eine Zylinderlängsmittelebene 27 liegt, die von mehreren Zylinderlängsmittelachsen von Zylindern der Brennkraftmaschine 1 aufgespannt wird. Beispielsweise ist der Kurbelwellenstarter 25 als Ritzelstarter ausgeführt. Zusätzlich kann die Brennkraftmaschine 1 über einen Riemenstarter 28 verfügen, wobei dieser beziehungsweise ein Elektromotor des Riemenstarters 28 eine Drehachse 29 aufweist. Zumindest diese Drehachse 29, bevorzugt jedoch der gesamte Riemenstarter 28, ist auf derselben Seite der Zylinderlängsmittelebene 27 angeordnet wie die Exzenterwelle 8. In vertikaler Richtung zwischen dem Riemenstarter 8 und der Exzenterwelle 8 kann ein Klimakompressor 30 vorgesehen sein.

In der hier dargestellten Ausführungsform der Brennkraftmaschine 1 weist diese eine Bodengrenzebene 31 auf, welche beispielsweise durch die am tiefsten gelegenen Punkte, insbesondere die drei am tiefsten gelegenen Punkte der Brennkraftmaschine 1, definiert ist. Parallel zu dieser Bodengrenzebene 31 liegt eine Parallelebene 32, welche derart angeordnet ist, dass sie die Exzenterwelle 8 beziehungsweise deren Drehachse aufnimmt. Alternativ kann die Parallelebene 32 auch derart definiert sein, dass sie von einer gedachten, die Drehachse der Exzenterwelle 8 schneidenden Geraden zusammen mit der Drehachse aufgespannt wird. Die Gerade liegt dabei als Parallele zu einer weiteren Geraden vor, die von den beiden in einem Querschnitt durch die Brennkraftmaschine 1 am tiefsten liegenden Punkte definiert ist. Es wird deutlich, dass sowohl der Kurbelwellenstarter 25 als auch der Riemenstarter 28 oberhalb dieser Parallelebene 32 vorliegen. Es kann jedoch auch vorgesehen sein, dass lediglich der Kurbelwellenstarter 25 oder lediglich der Riemenstarter 28 über der Parallelebene 32 angeordnet ist.

Zum Verstellen der Exzenterwelle 8 ist eine Stelleinrichtung 33 vorgesehen, welche beispielsweise einen Elektromotor mit einer Drehachse 34 aufweist. Diese Stelleinrichtung 33 beziehungsweise ihr Elektromotor oder zumindest die Drehachse 34 sollen nun unterhalb der Parallelebene 32 angeordnet sein. Besonders bevorzugt liegt das genannte Element zudem auf derselben Seite der Zylinderlängsmittelebene 27 vor wie die Exzenterwelle 8. Zwischen der Stelleinrichtung 33 und der Exzenterwelle 8 ist ein Getriebe 35 vorgesehen, welches hier als Riemengetriebe realisiert ist. Dieses soll auf der Vorderseite der Brennkraftmaschine 1 vorliegen, wobei ein hier nicht erkennbarer Kurbelwellenabtrieb, an welchem die Kurbelwelle 2 mit einer Abtriebswelle wirkverbunden ist, auf der Rückseite vorliegt.

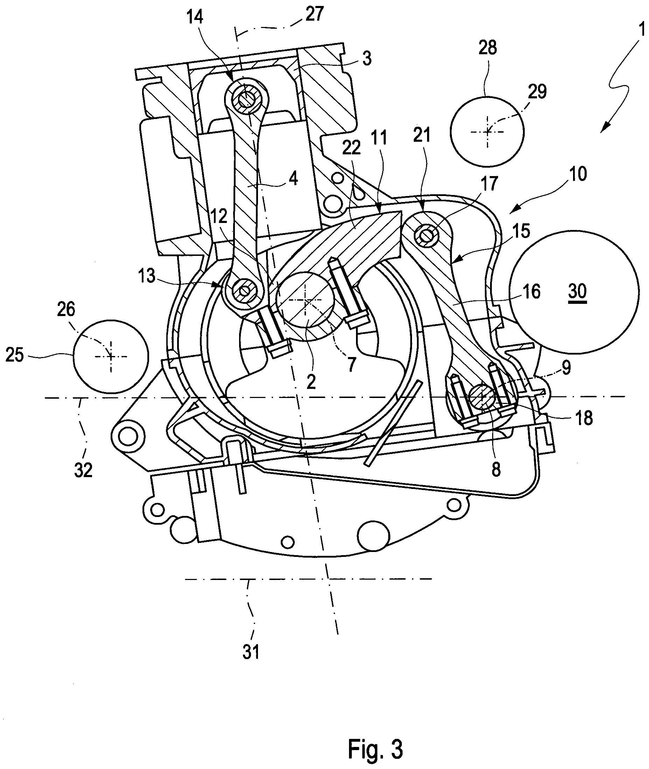

Die Figur 3 zeigt eine Frontschnittdarstellung der Brennkraftmaschine 1. Deutlich sind nun die einzelnen Bestandteile des Mehrgelenkskurbeltriebs 10 zu erkennen. Zur weiteren Erläuterung wird auf die vorstehenden Ausführungen verwiesen.

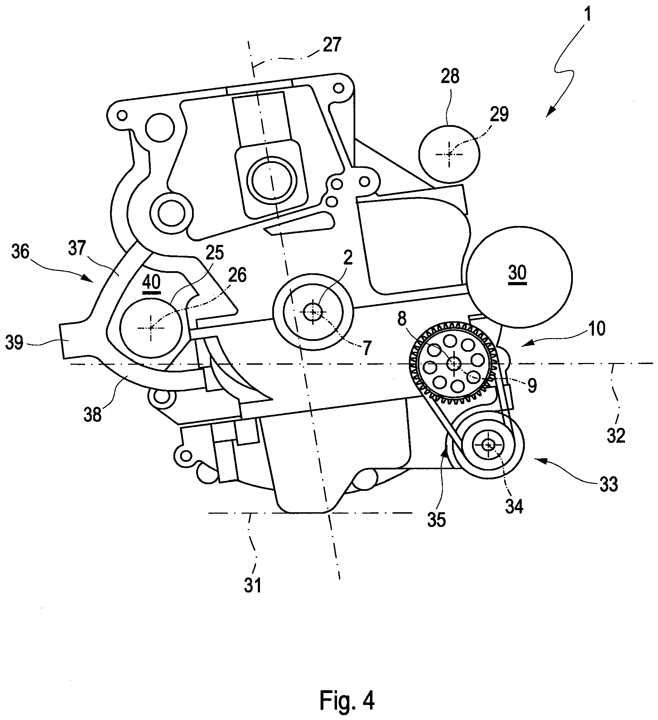

Die Figur 4 zeigt erneut die Frontansicht der Brennkraftmaschine 1, wobei eine Motorstütze 36 erkennbar ist, die an der Brennkraftmaschine 1 angreift. Die Brennkraftmaschine 1 ist gemäß den vorstehenden Ausführungen ausgebildet. Die Motorstütze 36 weist beispielsweise zwei Befestigungsarme 37 und 38 sowie einen Koppelarm 39 auf. Mit den Befestigungsarmen 37 und 38 greift die Motorstütze 36 an der Brennkraftmaschine an, während über den Koppelarm 39 die Befestigungsarme 37 und 38 mit einer Karosserie des Kraftfahrzeugs zum Halten der Brennkraftmaschine 1 in dem Motorraum verbunden sind. Es wird deutlich, dass die Befestigungsarme 37 und 38 zusammen mit der Brennkraftmaschine einen Hohlraum 40 ausbilden, in welchem der Kurbelwellenstarter 25 wenigstens bereichsweise, insbesondere vollständig, angeordnet ist. Somit ist der Kurbelwellenstarter 25 vor Beschädigungen und/oder thermischen Einflüssen geschützt.

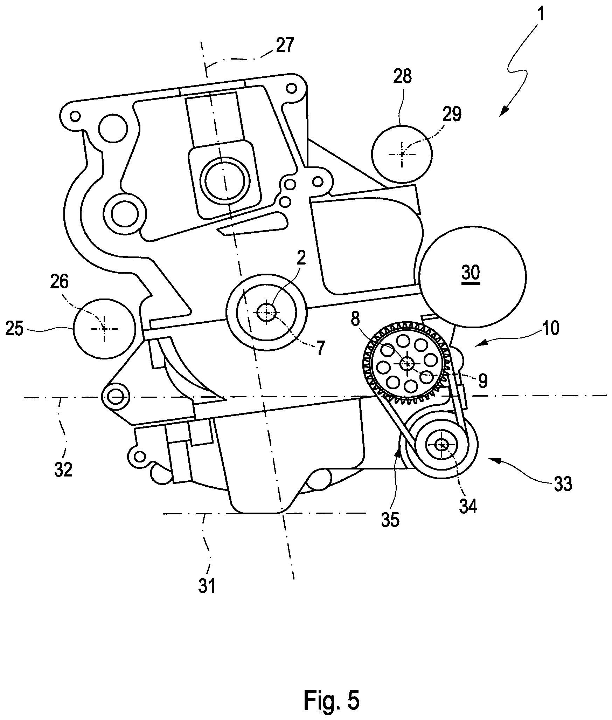

Die Figur 5 zeigt eine Frontansicht der Brennkraftmaschine 1 in einer alternativen Ausgestaltung. Grundsätzlich gilt das vorstehend Gesagte. Auch kann die Motorstütze 36 zusätzlich vorgesehen sein. Der Unterschied zu der bereits beschriebenen Ausführungsform liegt allein in der Anordnung der Parallelebene 32. Diese liegt zwar wiederum parallel zu der Bodengrenzebene 31 vor, schmiegt sich jedoch tangential an eine effektive Hüllfläche 41 (hier nicht erkennbar) der Kurbelwelle 2 der Brennkraftmaschine 1 an. Dabei ist die Drehachse 9 der Exzenterwelle 8, insbesondere die gesamte Exzenterwelle 8, oberhalb der Parallelebene 32 angeordnet. Insbesondere liegt die Exzenterwelle 8 also auf derselben Seite der Parallelebene 32 wie der Kurbelwellenstarter 25 und/oder der Riemenstarter 28 und/oder der Klimakompressor 30 und/oder die Drehachse 7 der Kurbelwelle 2.

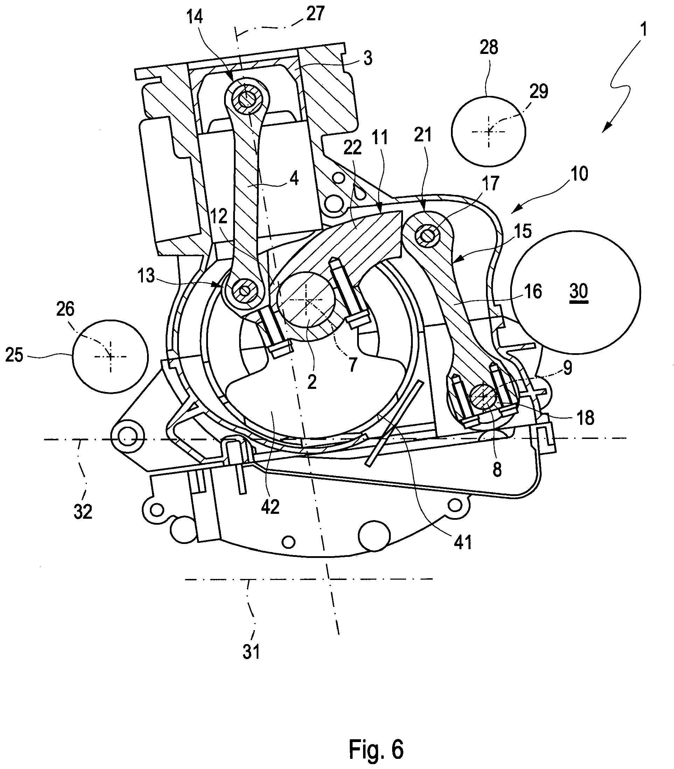

Aus der Figur 6 ist eine Frontschnittansicht der Brennkraftmaschine 1 in der alternativen Ausgestaltung zu entnehmen. Es wird nun deutlich, dass die effektive Hüllfläche 41 der Kurbelwelle 2 im Wesentlichen von einem oder mehreren Gegengewichten 42 bestimmt wird, die der Kurbelwelle 2 zugeordnet sind und gemeinsam mit dieser umlaufen, wenn die Brennkraftmaschine 1 betrieben wird.

### BEZUGSZEICHENLISTE

- 1: Brennkraftmaschine
- 2: Kurbelwelle
- 3: Kolben
- 4: Kolbenpleuel
- 5: Wellenzapfen
- 6: Hubzapfen
- 7: Drehachse
- 8: Exzenterwelle
- 9: Drehachse
- 10: Mehrgelenkskurbeltrieb
- 11: Koppelglied
- 12: Hubarm
- 13: Schwenkgelenk
- 14: Schwenkgelenk
- 15: Anlenkpleueln
- 16: Pleuelstange
- 17: Pleuelauge
- 18: Pleuelauge
- 19: Hubzapfen
- 20: Drehlager
- 21: Schwenkgelenk
- 22: Koppelarm
- 23: Wellenabschnitt
- 24: (Exzenterwellengetriebe)
- 25: Kurbelwellenstarter
- 26: Drehachse
- 27: Zylinderlängsmittelebene
- 28: Riemenstarter
- 29: Drehachse
- 30: Klimakompressor
- 31: Bodengrenzebene
- 32: Parallelebene
- 33: Stelleinrichtung
- 34: Drehachse
- 35: Getriebe
- 36: Motorstütze
- 37: Befestigungsarm
- 38: Befestigungsarm
- 39: Koppelarm
- 40: Hohlraum
- 41: Hüllfläche
- 42: Gegengewicht

## Patentansprüche

1. Kraftfahrzeug mit einer in Längsrichtung in einen Motorraum eingebauten, mehrere Zylinder aufweisenden Brennkraftmaschine (1), die einen Mehrgelenkskurbeltrieb (10) mit einer Exzenterwelle (8), einen Kurbelwellenstarter (25) sowie zusätzlich einen Riemenstarter (30) aufweist, **dadurch gekennzeichnet, dass** der Kurbelwellenstarter (25) derart bezüglich der Brennkraftmaschine (1) angeordnet ist, dass eine von Zylinderlängsmittelachsen der Brennkraftmaschine (1) aufgespannte Zylinderlängsmittelebene (27) zwischen dem Kurbelwellenstarter (25) und der Exzenterwelle (8) liegt, dass der Riemenstarter (30) auf derselben Seite der Zylinderlängsmittelebene (27) angeordnet ist wie die Exzenterwelle (8), und dass der Kurbelwellenstarter (25) und der Riemenstarter (28) oberhalb einer Parallelebene (32) liegen, die parallel zu einer Bodengrenzebene (31) der Brennkraftmaschine (1) verläuft und eine Drehachse (9) der Exzenterwelle (8) aufnimmt oder die parallel zu der Bodengrenzebene (31) verläuft und tangential an einer effektiven Hüllfläche (41) einer Kurbelwelle (2) der Brennkraftmaschine (1) anliegt, wobei eine Stelleinrichtung (33) für eine Exzenterwellenverstellung unterhalb der Parallelebene (32) und auf derselben Seite der Zylinderlängsmittelebene (27) wie die Exzenterwelle (8) liegt.

2. Kraftfahrzeug nach Anspruch 1, **dadurch gekennzeichnet, dass** der Kurbelwellenstarter (25) als Ritzelstarter ausgebildet ist.

3. Kraftfahrzeug nach einem der vorhergehenden Ansprüche, **dadurch gekennzeichnet, dass** ein die Stelleinrichtung (33) und die Exzenterwelle (8) wirkverbindendes Getriebe (35) in Längsrichtung der Brennkraftmaschine (1) gesehen auf der einen Kurbelwellenabtrieb abgewandten Seite der Brennkraftmaschine (1) angeordnet ist.

4. Kraftfahrzeug nach einem der vorhergehenden Ansprüche, **dadurch gekennzeichnet, dass** der Kurbelwellenstarter (25) in einem zwischen Brennkraftmaschine (1) und einer Motorstütze (36) vorliegenden Hohlraum (40) angeordnet ist, wobei die Brennkraftmaschine (1) über die Motorstütze (36) an einer Karosserie des Kraftfahrzeugs befestigt ist.

5. Verfahren zum Montieren eines Kraftfahrzeugs, insbesondere nach einem oder mehreren der vorhergehenden Ansprüche, wobei das Kraftfahrzeug über eine in Längsrichtung in einen Motorraum eingebaute, mehrere Zylinder aufweisende Brennkraftmaschine (1) verfügt, die einen Mehrgelenkskurbeltrieb (10) mit einer Exzenterwelle (8), einen Kurbelwellenstarter (25) sowie zusätzlich einen Riemenstarter (30) aufweist, **dadurch gekennzeichnet, dass** der Kurbelwellenstarter (25) derart bezüglich der Brennkraftmaschine (1) angeordnet wird, das eine von Zylinderlängsmittelachsen der Brennkraftmaschine (1) aufgespannte Zylinderlängsmittelebene (27) zwischen dem Kurbelwellenstarter (25) und der Exzenterwelle (8) liegt, dass der Riemenstarter (30) auf derselben Seite der Zylinderlängsmittelebene (27) angeordnet ist wie die Exzenterwelle (8), und dass der Kurbelwellenstarter (25) und der Riemenstarter (28) oberhalb einer Parallelebene (32) liegen, die parallel zu einer Bodengrenzebene (31) der Brennkraftmaschine (1) verläuft und eine Drehachse (9) der Exzenterwelle (8) aufnimmt oder die parallel zu der Bodengrenzebene (31) verläuft und tangential an einer effektiven Hüllfläche (41) einer Kurbelwelle (2) der Brennkraftmaschine (1) anliegt, wobei eine Stelleinrichtung (33) für eine Exzenterwellenverstellung unterhalb der Parallelebene (32) und auf derselben Seite der Zylinderlängsmittelebene (27) wie die Exzenterwelle (8) liegt.

6. Verfahren nach Anspruch 5, **dadurch gekennzeichnet, dass** der Kurbelwellenstarter (25) an der Brennkraftmaschine (1) angeordnet sowie elektrisch mit dieser verbunden wird und anschließend eine Abgasanlage an der Brennkraftmaschine (1) befestigt wird.

## Claims

1. Motor vehicle with an internal combustion engine (1) mounted in a longitudinal direction in a motor space and comprising a plurality of cylinders, the internal combustion engine comprising a multi-joint crank drive (10) with an eccentric shaft (8), a crankshaft starter (25) and additionally a belt starter (30), **characterised in that** the crankshaft starter (25) is arranged relative to the internal combustion engine (1) so that a cylinder longitudinal centre plane (27) spanned by cylinder longitudinal centre axes of the internal combustion engine (1) is situated between the crankshaft starter (25) and the eccentric shaft (8), the belt starter (30) is arranged on the same side of the cylinder longitudinal centre plane (27) as the eccentric shaft (8), and the crankshaft starter (25) and the belt starter (28) are arranged above a parallel plane (32) which extends parallel to a bottom delimiting plane (31) of the internal combustion engine (1) and receives a rotation axis (9) of the eccentric shaft (8) or which extends parallel to the bottom delimiting plane (31) and tangentially contacts an effective enveloping surface (41) of a crankshaft (2) of the internal combustion engine (1), wherein an actuator (33) for adjusting the eccentric shaft is arranged below the parallel plane (32) and on the same side of the cylinder longitudinal centre plane (27) as the eccentric shaft (8).

2. Motor vehicle according to claim 1, **characterised in that** the crankshaft starter (25) is configured as a pinion starter.

3. Motor vehicle according to any of the preceding claims, **characterised in that** a transmission (35) operatively connecting the actuator (33) and the eccentric shaft (8) is arranged when viewed in longitudinal direction of the internal combustion engine (1) on a side of the internal combustion engine (1) which faces away from an output of the crankshaft.

4. Motor vehicle according to any of the preceding claims, **characterised in that** the crankshaft starter (25) is arranged in a hollow space (40) formed between the internal combustion engine (1) and a motor support (36), wherein the internal combustion engine (1) is fastened to a body of the motor vehicle via the motor support (36).

5. Method for assembling a motor vehicle, in particular according to one or more of the preceding claims, wherein the motor vehicle comprises an internal combustion engine (1) mounted in a longitudinal direction in a motor space and comprising a plurality of cylinders, said internal combustion engine comprising a multi-joint crank drive (10) with an eccentric shaft (8), a crankshaft starter (25) and additionally a belt starter (30), **characterised in that** the crankshaft starter (25) is arranged relative to the internal combustion engine (1) so that a cylinder longitudinal centre plane (27) spanned by cylinder longitudinal centre axes of the internal combustion engine (1) is situated between the crankshaft starter (25) and the eccentric shaft (8), the belt starter (30) is arranged on the same side of the cylinder longitudinal centre plane (27) as the eccentric shaft (8), and the crankshaft starter (25) and the belt starter (28) are arranged above a parallel plane (32) which extends parallel to a bottom delimiting plane (31) of the internal combustion engine (1) and receives a rotation axis (9) of the eccentric shaft (8) or which extends parallel to the bottom delimiting plane (31) and tangentially contacts an effective enveloping surface (41) of a crankshaft (2) of the internal combustion engine (1), wherein an actuator (33) for adjusting the eccentric shaft is arranged below the parallel plane (32) and on the same side of the cylinder longitudinal centre plane (27) as the eccentric shaft (8).

6. Method according to claim 5, **characterised in that** the crankshaft starter (25) is arranged on the internal combustion engine (1) and electrically connected to the internal combustion engine, and subsequently an exhaust gas system is fastened on the internal combustion engine (1).

## Revendications

1. Véhicule automobile avec un moteur à combustion interne (1) présentant plusieurs cylindres, monté dans un compartiment moteur dans le sens longitudinal, qui présente un mécanisme bielle-manivelle à plusieurs articulations (10) avec un arbre d'excentrique (8), un démarreur de vilebrequin (25) ainsi qu'en outre un démarreur de courroie (30), **caractérisé en ce que** le démarreur de vilebrequin (25) est agencé par rapport au moteur à combustion interne (1) de telle manière qu'un plan médian longitudinal de cylindre (27) défini par des axes médians longitudinaux de cylindre du moteur à combustion interne (1) se situe entre le démarreur de vilebrequin (25) et l'arbre d'excentrique (8), que le démarreur de courroie (30) est agencé du même côté du plan médian longitudinal de cylindre (27) que l'arbre d'excentrique (8), et que le démarreur de vilebrequin (25) et le démarreur de courroie (28) se situent au-dessus d'un plan parallèle (32), qui s'étend parallèlement à un plan de délimitation de fond (31) du moteur à combustion interne (1) et reçoit un axe de rotation (9) de l'arbre d'excentrique (8) ou qui s'étend parallèlement au plan de délimitation de fond (31) et s'appuie tangentiellement contre une surface enveloppe (41) efficace d'un vilebrequin (2) du moteur à combustion interne (1), dans lequel un dispositif de réglage (33) pour un ajustement d'arbre d'excentrique se situe sous le plan parallèle (32) et du même côté du plan médian longitudinal de cylindre (27) que l'arbre d'excentrique (8).

2. Véhicule automobile selon la revendication 1, **caractérisé en ce que** le démarreur de vilebrequin (25) est réalisé en tant que démarreur de pignon.

3. Véhicule automobile selon l'une quelconque des revendications précédentes, **caractérisé en ce qu'**un engrenage (35) reliant activement le dispositif de réglage (33) et l'arbre d'excentrique (8) vu dans le sens longitudinal du moteur à combustion interne (1) est agencé sur le côté du moteur à combustion interne (1) opposé à la sortie de vilebrequin.

4. Véhicule automobile selon l'une quelconque des revendications précédentes, **caractérisé en ce que** le démarreur de vilebrequin (25) est agencé dans une cavité (40) située entre le moteur à combustion interne (1) et un support de moteur (36), dans lequel le moteur à combustion interne (1) est fixé à une carrosserie du véhicule automobile par le biais du support de moteur (36).

5. Procédé de montage d'un véhicule automobile, en particulier selon une ou plusieurs des revendications précédentes, dans lequel le véhicule automobile dispose d'un moteur à combustion interne (1) présentant plusieurs cylindres, monté dans un compartiment moteur dans le sens longitudinal, qui présente un mécanisme bielle-manivelle à plusieurs articulations (10) avec un arbre d'excentrique (8), un démarreur de vilebrequin (25) ainsi qu'en outre un démarreur de courroie (30), **caractérisé en ce que** le démarreur de vilebrequin (25) est agencé par rapport au moteur à combustion interne (1) de telle manière qu'un plan médian longitudinal de cylindre (27) défini par des axes médians longitudinaux de cylindre du moteur à combustion interne (1) se situe entre le démarreur de vilebrequin (25) et l'arbre d'excentrique (8), que le démarreur de courroie (30) est agencé du même côté du plan médian longitudinal de cylindre (27) que l'arbre d'excentrique (8), et que le démarreur de vilebrequin (25) et le démarreur de courroie (28) se situent au-dessus d'un plan parallèle (32), qui s'étend parallèlement à un plan de délimitation de fond (31) du moteur à combustion interne (1) et reçoit un axe de rotation (9) de l'arbre d'excentrique (8) ou qui s'étend parallèlement au plan de délimitation de fond (31) et s'appuie tangentiellement contre une surface enveloppe (41) efficace d'un vilebrequin (2) du moteur à combustion interne (1), dans lequel un dispositif de réglage (33) pour un ajustement d'arbre d'excentrique se situe sous le plan parallèle (32) et du même côté du plan médian longitudinal de cylindre (27) que l'arbre d'excentrique (8).

6. Procédé selon la revendication 5, **caractérisé en ce que** le démarreur de vilebrequin (25) est agencé au niveau du moteur à combustion interne (1) et est relié électriquement à celui-ci et ensuite un système de gaz d'échappement est fixé au moteur à combustion interne (1).
